# EUROPEAN PATENT APPLICATION

(11) **EP 4 464 677 A1**
(43) Date of publication of application: **20.11.2024**
(21) Application number: 22920520.8
(22) Date of filing: 08.12.2022
(51) Int. Cl.: C03C 17/34, C03C 21/00, G09F 9/00

(54) **GLASS ARTICLE WITH EASY-TO-CLEAN COATING**

(30) Priority: 13.01.2022 JP 2022003787
(71) Applicant: Nippon Sheet Glass Company, Limited, Tokyo 108-6321 (JP)
(72) Inventor: KAWAZU, Mitsuhiro, Tokyo 108-6321 (JP); IIDA, Genichiro, Tokyo 108-6321 (JP)
(74) Representative: Hope, Adam John
(86) International application number: PCT/JP2022/045380
(87) International publication number: WO 2023/136000

(57) **Abstract**

Provided is a coating-attached glass article including: a glass substrate; an easy-to-clean coating on the glass substrate; and a diffusion prevention layer between the glass substrate and the coating. Moreover, a coating-attached glass article is provided, the coating-attached glass article including: a glass substrate; and an easy-to-clean coating on the glass substrate, wherein the glass substrate includes a dealkalized layer in a surface on the coating side. In each of the glass articles, a sum of a content of a Group 1 element and a content of a Group 2 element in a surface of the coating on the glass substrate side is 5 atm% or less.

## Description

### TECHNICAL FIELD

The present invention relates to an easy-to-clean-coating-attached glass article.

### BACKGROUND ART

Films called easy-to-clean coatings are sometimes formed on surfaces of various glass substrates and other substrates. Easy-to-clean coatings are commonly formed by applying a water-repellent agent including a water-repellent organic substance, specifically, a fluorine-containing compound or a silicone-based compound.

Techniques for imparting water repellency without using an organic substance are also under study. For example, Patent Literature 1 discloses a technique for firing an oxide ceramic at 1600°C for 5 hours in an atmosphere where the organic substance concentration and the moisture concentration are low to sinter the oxide ceramic and impart water repellency thereto. However, this technique is for imparting water repellency to an oxide ceramic itself being a highly heat-resistant substrate and requires sintering at high temperatures. It is therefore difficult to apply the technique to glass substrates. Heating at 1600°C for 5 hours as disclosed in Patent Literature 1 commonly makes glass substrates at least too soft to keep their shapes as substrates and, in some cases, completely melts the glass substrates.

### CITATION LIST

### Patent Literature

Patent Literature 1: JP 2015-140277 A

### SUMMARY OF INVENTION

### Technical Problem

Glass substrates are sometimes subjected to a treatment involving heating under temperature and heating duration conditions where the glass substrates do not become soft. According to studies by the present inventors, although the details of the reason are unknown, the water repellency of an easy-to-clean coating formed on a glass substrate can temporarily decrease soon after heating and then can recover gradually. However, the production efficiency greatly declines if glass substrates are stored before shipment for a long time for recovery of the water repellency and confirmation of the recovery. Meanwhile, some treatments, typified by bending, involving heating of glass substrates make formation of coatings difficult or inefficient. Therefore, performing a heating treatment of glass substrates before formation of coatings is not desirable as a measure to improve the production efficiency. Considering the production efficiency, it is desirable that the water repellency of an easy-to-clean-coating-attached glass article recovers early after a heating treatment.

In view of the above circumstances, the present invention aims to provide an easy-to-clean-coating-attached glass article suitable for improving production efficiency.

### Solution to Problem

The present invention provides a coating-attached glass article, including:
a glass substrate;
an easy-to-clean coating on the glass substrate; and
a diffusion prevention layer between the glass substrate and the coating.

The present invention also provides a coating-attached glass article, including:
a glass substrate; and
an easy-to-clean coating on the glass substrate, wherein
the glass substrate includes a dealkalized layer in a surface on the coating side.

### Advantageous Effects of Invention

The present invention provides an easy-to-clean-coating-attached glass article suitable for improving production efficiency.

### BRIEF DESCRIPTION OF DRAWINGS

FIG. 1 shows the result of analysis of components in a depth direction of a coating-attached glass article produced in Example 1.
FIG. 2 shows the result of analysis of components in a depth direction of a coating-attached glass article produced in Example 2.
FIG. 3 shows the result of analysis of components in a depth direction of a coating-attached glass article produced in Example 6.
FIG. 4 shows the result of analysis of components in a depth direction of a coating-attached glass article produced in Comparative Example 1.
FIG. 5 shows the result of analysis of components in a depth direction of a coating-attached glass article produced in Comparative Example 2.

### DESCRIPTION OF EMBODIMENTS

The following description of embodiments of the present invention is not intended to limit the present invention to specific embodiments. The term "main component" as used herein means a component whose content is 50% or more, particularly 60% or more, on a mass basis. The phrase "substantially free" means that the content of a component is less than 1% or even less than 0.1% on a mass basis. The phrase "substantially flat" means that when a surface is observed using a scanning electron microscope (SEM), no irregularities having a height or depth of 500 nm or more are confirmed on the surface. The term "ordinary temperature" is used as a term that means a temperature in the range of 5 to 35°C, particularly 10 to 30°C.

### [First embodiment]

A coating-attached glass article provided by the present embodiment includes:
a glass substrate;
an easy-to-clean coating on the glass substrate; and
a diffusion prevention layer between the glass substrate and the coating.

It has been found out that provision of the diffusion prevention layer can improve recovery of the water repellency of the coating, specifically, an increase rate of the water contact angle, after a thermal treatment.

In the present embodiment, the diffusion prevention layer is present between the glass substrate and the coating. From the results of later-described element analysis, etc., it is thought that the diffusion prevention layer reduces diffusion of a component, particularly an alkaline component, of the glass from the glass substrate to the coating and thereby contributes to improvement of the increase rate of the water contact angle.

Hereinafter, the glass substrate, the coating, and the diffusion prevention layer included in the coating-attached glass article of the present embodiment will be described. Subsequently, properties that can be achieved by the present embodiment and applications of the article will be described, and, at the end, manufacturing methods of the present embodiment will be described.

### (Glass substrate)

The glass of the glass substrate is not limited to a particular type. The glass substrate may be formed of any of various glasses, such as soda-lime glass, borosilicate glass, aluminosilicate glass, alkali-free glass, and quartz glass. The glass substrate may include SiO₂ as its main component. The glass substrate may include an oxide of a Group 1 element (an alkaline component, or an alkali metal element) typified by sodium or potassium. The glass substrate may include a Group 2 element typified by calcium. The size and the shape of the glass substrate are not particularly limited, either. The glass substrate may be a glass sheet, a glass container, a glass lid, a glass tube, a glass bulb, a glass lens, or another formed body. The glass container is, for example, a glass vial, a glass ampoule, or a glass bottle, and may have another shape such as the shape of a tray or a Petri dish. The shape of the glass lid is not particularly limited as long as the glass lid functions as a lid, and the glass lid may have a shape, for example, allowing the glass lid to be used as a lid of a cooking device.

As described above, the glass substrate may be a glass sheet. The glass sheet may have the shape of a flat plate, or may have a curved shape achieved by a bending treatment. The thickness of the glass sheet is not particularly limited, and is, for example, 0.5 mm or more and 12 mm or less. The glass sheet may be treated so as to be suitable for use as window glass of architecture, vehicles, and the like. The glass sheet may be subjected to, for example, a reinforcement treatment. In other words, the glass substrate such as a glass sheet may be formed of a reinforced glass. As the reinforcement treatment are known thermal tempering in which the glass sheet is rapidly cooled after heating to form a compressive stress layer in a surface of the glass sheet and chemical strengthening in which a compressive stress layer is formed in a surface of the glass sheet by ion exchange of alkali metal ions. The glass sheet may be integrated with another glass sheet by a lamination processing and/or a double-glazing processing.

Many of the above treatments of glass sheets involve heating of the glass sheets. For example, the bending treatment of a glass sheet includes a step of softening the glass sheet by heating. In a lamination processing treatment and a double-glazing processing treatment as well as in the reinforcement treatment, glass sheets can be, in some cases, heated to a high temperature depending on the type of a resin film sandwiched by the glass sheets or the type of a sealant used to seal the space between the glass sheets. It is conceivable that to prevent the water repellency of easy-to-clean coatings from decreasing by these heating, coatings are formed after a treatment involving heating of glass sheets. However, such a restriction on manufacturing steps can reduce the efficiency in mass production. For example, uniformly applying a coating liquid onto a curved surface is much more difficult than uniformly applying a coating liquid onto a surface of a flat plate. A step of applying a coating liquid onto a flat glass strip before cutting the flat glass strip and processing each of the resulting pieces to have a curved plane can be performed much more efficiently.

In the case of the glass sheet, the wide variety of treatments involving heating include, for example, at least one selected from the group consisting of a bending treatment (heat bending treatment), a thermal tempering treatment, a chemical strengthening treatment, a lamination processing treatment, a double-glazing processing treatment, and a film formation treatment which involve heating, and are particularly a heat bending treatment and/or a thermal tempering treatment. That is, in the present embodiment, the glass substrate may be a glass sheet subjected to at least one treatment selected from the group consisting of a heat bending treatment and a thermal tempering treatment. The temperature set in the above thermal treatments is commonly, at most, approximately 760°C.

Conventionally, a glass sheet is subjected to a heat bending treatment and/or a thermal tempering after being cut into a given shape, and then a coating liquid for formation of an easy-to-clean coating is applied to a principal surface of the glass sheet. Therefore, a portion of the coating liquid is attached to an edge face of the glass sheet and the coating is formed also on at least a portion of the edge face. On the other hand, according to the present embodiment, it is possible to form the easy-to-clean coating by applying the coating liquid onto the diffusion prevention layer on a principal surface of a flat-plate-shaped glass sheet and thereafter subject the glass sheet to at least one treatment selected from the group consisting of a heat bending treatment and a thermal tempering treatment. The glass sheet provided by this embodiment can be a glass sheet having the coating on at least one principal surface of the glass sheet, and not having the coating on an edge face of the glass sheet. According to a conventional method, the resulting coating can be locally thick at the edge face where the coating liquid tends to stay. Therefore, being capable of preventing formation of the coating that is locally thick at the edge face is advantageous, for example, in ensuring a fine product appearance. In addition to such quality improvement, being capable of preventing formation of the coating that is locally thick at the edge face also contributes to reduction in end product cost because a coating treatment can be continuously applied to an uncut glass sheet having a large area.

### (Coating)

The easy-to-clean coating may include an inorganic substance as its main component. The coating may include an organic substance as its main component, but preferably includes an inorganic substance in the case where a heating treatment at a high temperature will be performed. The coating may be substantially free of an organic substance. Examples of the inorganic substance include various inorganic compounds such as oxides, nitrides, and carbides, and the inorganic substance is preferably an oxide. The coating may include an oxide as its main component. The oxide is preferably zirconium oxide. Another preferred oxide is an oxide of a rare-earth element. The coating may include at least one selected from the group consisting of the zirconium oxide and the oxide of the rare-earth element, and may include the zirconium oxide and the oxide of the rare-earth element as its main components. The zirconium oxide and/or the oxide of the rare-earth element is suitable for achieving an appropriate water repellency. The oxide is particularly preferably the zirconium oxide. The coating may include the zirconium oxide. The zirconium oxide is useful for improvement of the abrasion resistance of the easy-to-clean coating. The zirconium oxide may account for 5 mol% or more, 8 mol% or more, or 9 mol% or more of the coating. The upper limit of the zirconium oxide content is not particularly limited, and is preferably 90 mol%. When the zirconium oxide content is more than 90 mol%, the adhesion between the glass substrate and the coating is likely to decrease. The coating may include the zirconium oxide as its main component. The coating may be substantially free of a component other than the zirconium oxide.

The coating may include the oxide of the rare-earth element. The oxide of the rare-earth element may be at least one selected from the group consisting of cerium oxide, lanthanum oxide, and yttrium oxide.

The oxide of the rare-earth element can be cerium oxide. The cerium oxide is a preferred material that can impart an appropriate water repellency as the zirconium oxide does. The cerium oxide can be crystalline. A crystalline rare earth oxide, particularly crystalline cerium oxide, is suitable for achieving the easy-to-clean properties. The crystallite size of the crystalline cerium oxide is, for example, in the range of 4 to 10 nm. In the case where crystals have developed such that the crystallite size is in this range, a diffusion length from the glass substrate is long and the alkaline component is less likely to reach the surface of the coating even when the coating is thin.

According to studies made by the present inventors using an X-ray diffraction method, a combination of the zirconium oxide and the cerium oxide is particularly suitably employed for the easy-to-clean coating in that the zirconium oxide can collaborate with the cerium oxide without imparting crystals of the cerium oxide.

The cerium oxide may account for 10 mol% or more, 30 mol% or more, 40 mol% or more, 50 mol% or more of the coating. The upper limit of the cerium oxide content is not particularly limited, and is preferably 95 mol%. When the cerium oxide content is more than 95 mol%, the adhesion between the glass substrate and the coating is likely to decrease. The coating may include the cerium oxide as its main component. The coating may be substantially free of a component other than the cerium oxide. The cerium oxide preferably includes CeO₂, namely, an oxide of tetravalent cerium. CeO₂ is a more desirable component than Ce₂O₃, namely, an oxide of trivalent cerium, in terms of increasing the easy-to-clean properties. However, the coating may include Ce₂O₃ as the cerium oxide. For example, in the case where a compound including trivalent cerium is used as a source of the cerium oxide and a portion thereof is oxidized to tetravalent cerium, the rest of the trivalent cerium is included as Ce₂O₃ in the coating together with CeO₂. Herein, the cerium oxide content in the coating and a ratio and a rate of the cerium oxide in the coating are calculated from all cerium oxide in terms of CeO₂, in other words, assuming that all cerium is present as tetravalent cerium.

In the easy-to-clean coating, a molar ratio (cerium oxide/zirconium oxide) of the cerium oxide to the zirconium oxide is not particularly limited, and may be 0.01 or more, 0.1 or more, 0.5 or more, 0.75 or more, or 1 or more, and may be 50 or less, 30 or less, 20 or less, or 15 or less.

The coating may include aluminum oxide in addition to the zirconium oxide and/or the oxide of the rare-earth element. The aluminum oxide can contribute to improvement of the water repellency of the coating. The aluminum oxide may account for 5 mol% or more, 10 mol% or more, or even 20 mol% or more of the coating. The upper limit of the aluminum oxide content is not particularly limited, and is preferably 50 mol%. When the aluminum oxide content is more than 50 mol%, the water repellency of the coating is likely to decrease.

A sum of a content of the Group 1 element and a content of the Group 2 element in a surface of the coating on the glass substrate side is preferably limited. The sum of the contents may be 5 atomic percent (atm%) or less, 4 atm% or less, 3 atm% or less, or even 2 atm% or less. The sum of the content of the Group 1 element and the content of the Group 2 element in the glass composition forming the glass substrate may be more than 5 atm%, 7 atm% or more, or even 10 atm% or more. A component that can chiefly affect the properties of the coating is the Group 1 element, but the Group 2 element can also affect the properties of the coating.

Alternatively, attention may be focused on a Group 1 element whose content is highest among Group 1 elements in the glass composition forming the glass substrate and a Group 2 element whose content is highest among Group 2 elements in the glass composition forming the glass substrate. From this point of view, when the Group 1 element whose content is highest among the Group 1 elements in the glass composition forming the glass substrate is represented by an element R and the Group 2 element whose content is highest among the Group 2 elements in the glass composition is represented by an element M, a sum of a content of the element R and a content of the element M in the surface of the coating on the glass substrate side may be 4 atm% or less, 3 atm% or less, 2 atm% or less, or even 1 atm% or less. The element R is typically sodium. The element M is typically calcium. However, the combination of the element R and the element M may be, for example, sodium and magnesium, sodium and strontium, potassium and calcium, lithium and calcium, or lithium and magnesium. The sum of the content of the element R and the content of the element M in the glass composition forming the glass substrate may be more than 4 atm%, more than 5 atm%, 7 atm% or more, or even 10 atm% or more.

In the present embodiment, the contact angle of water on the surface of the coating after exposure of the glass article to a thermal treatment at 760°C for 4 minutes and storage in air at ordinary temperature for 2 weeks can be 60° or more and 130° or less. The water contact angle after exposure to the thermal treatment can be 61° or more, 65° or more, 70° or more, or even 75° or more. The upper limit of the water contact angle is not particularly limited, and is, for example, 130° or less, 120° or less, 110° or less, 100° or less, or even less than 95°. The water contact angle on the surface of the coating can be in a range defined by any combination of the lower and upper limits described above even before the thermal treatment. Both before and after the thermal treatment, the water contact angle may be in a range of any combination of the lower and upper limits described above as examples, such as the range of 61° or more and 90° or less. The water contact angle can be measured for 4 mg (about 4 µL) of purified water dropped onto the surface of the coating according to the sessile drop method defined in JIS R 3257: 1999. In the present embodiment, the contact angle of water on the surface of the coating can decrease temporarily just after the thermal treatment. It takes several tens of days in some cases to recover the contact angle. The water repellency of the coating of the present embodiment recovers to achieve the contact angle of the above level by storage in air at ordinary temperature for 2 weeks. Incidentally, an appropriate humidity of the air in which the glass article is left is, for example, 20% or more and 60% or less as expressed by a relative humidity.

In the present embodiment, the coating may be substantially free of a fluorine-containing organic compound, particularly a fluoroalkyl-containing compound.

The easy-to-clean coating of the present embodiment may be a single-layer film.

The easy-to-clean coating of the present embodiment can achieve a water contact angle of 60° or more, 61° or more, 65° or more, 70° or more, or, in some cases, 75° or more. The upper limit of the water contact angle is not particularly limited, and is, for example, 130° or less, 120° or less, 110° or less, 105° or less, even 100° or less, or 95° or less.

The easy-to-clean coating of the present embodiment does not completely lose its water repellency even when heated to a high temperature, for example, to 500°C or even 760°C. The coating of the present embodiment can achieve, for example, a water contact angle of 60° or more, 61° or more, 65° or more, 70° or more, or, in some cases, 75° or more, and of 130° or less, 120° or less, 110° or less, 105° or less, even 100° or less, 95° or less, even after exposure of the glass article to the thermal treatment at 760°C for 4 minutes.

A thickness of the easy-to-clean coating is, for example, 2 nm or more and 1000 nm or less, even 5 nm or more and 500 nm or more, particularly 10 nm or more and 300 nm or less. The thickness of the coating may be 15 nm or more or even 20 nm or more, and may be 100 nm or less or even 50 nm or less. When the easy-to-clean coating is too thick, cracking, which causes peeling, is likely to happen. The thickness of the coating is therefore desirably 30 nm or less.

The surface of the easy-to-clean coating may be substantially flat.

When the glass substrate is a glass sheet, the easy-to-clean coating may be arranged on only one principal surface of the glass sheet, or may be formed on both principal surfaces of the glass sheet. However, to prevent a decrease in visible transmittance, the coating is desirably arranged on only one principal surface of the glass sheet.

### (Diffusion prevention layer)

The diffusion prevention layer may be amorphous. The amorphous diffusion prevention layer is suitable for reducing diffusion of the alkaline component from the glass substrate to the coating.

The diffusion prevention layer may include silicon oxide (SiO₂) as its main component. The silicon oxide is likely to form an amorphous structure due to an irregular network structure formed of a silicon atom and an oxygen atom. The diffusion prevention layer may include an oxide other than silicon oxide. For example, the diffusion prevention layer may include aluminum oxide, zirconium oxide, or cerium oxide. The diffusion prevention layer may include a minor component diffusing from the glass substrate and/or the easy-to-clean coating. However, the diffusion prevention layer may be substantially free of a component other than the silicon oxide.

A thickness of the diffusion prevention layer is, for example, 10 to 400 nm. The thickness of the diffusion prevention layer may be 10 nm or more, 20 nm or more, or even 30 nm or more, and may be 350 nm or less, 300 nm or less, or even 250 nm or less.

The surface of the diffusion prevention layer may be substantially flat. For the abrasion resistance of the coating, a layer having a surface with irregularities is, in some cases, arranged between the glass substrate and the coating. However, in terms of diffusion prevention, it is unnecessary to form a depressed portion at which the thickness is locally reduced.

The diffusion prevention layer may be a single-layer film or may be a multi-layer film formed of a plurality of layers. The water-repellent film being a single-layer film is advantageous in reducing mass production cost. The diffusion prevention layer being a multi-layer film may include an amorphous layer. The diffusion prevention layer being a multi-layer film may include a layer including silicon oxide as its main component.

The diffusion prevention layer may be a layer that can function as a low-emissivity film (Low-E film), an electrically conductive film, a reflection-reducing film, a colored film, or the like.

### (Properties)

The water repellency that can be achieved by the glass article of the present embodiment is as described above. In addition to this, the glass article of the present embodiment can have, for example, the following abrasion resistance. An absolute value of a difference between visible transmittances of the glass article may be 0.7% or less, the visible transmittances being determined before and after an abrasion resistance test performed for the easy-to-clean coating in accordance with an abrasion resistance test in EN 1096-2: 2001 under a condition of 500 strokes (Class A) except that Grade No. 0000 steel wool is used instead of a felt pad.

The absolute value of the difference between the visible transmittances determined for the glass article before and after the above abrasion resistance test in which steel wool is used may be 0.6% or less, 0.5% or less, or even 0.4% or less. The lower limit of the absolute value of the difference between the visible transmittances is not particularly limited, and is, for example, 0.01% or more.

The glass article of the present embodiment can have, for example, the following abrasion resistance. An absolute value of a difference between visible transmittances may be 0.22% or less or even 0.1% or less, the visible transmittances being determined before and after an abrasion resistance test performed in accordance with the abrasion resistance test in EN 1096-2: 2001 in which a felt pad is used, except that a condition of 10000 strokes is employed instead of the condition of 500 strokes (Class A).

Moreover, the glass article of the present embodiment can have, for example, the following optical properties. A visible transmittance of the glass article may be 65% or more, 70% or more, 80% or more, or even 85% or more. The upper limit of the visible transmittance is not particularly limited, and is, for example, 95%. A haze ratio of the glass article is, for example, 10% or less, and is preferably 5% or less, even 3% or less, or particularly 1% or less. According to the present embodiment, a haze ratio of 0.5% or less or even 0.3% or less.

The preferred ranges of the visible transmittance and the haze ratio are as follows. More preferred ranges thereof are shown in the parentheses.
Visible transmittance: 80% to 95% (85% to 95%)
Haze ratio: 5% or less (4% or less)

### (Applications of article)

The coating-attached glass article according to the present embodiment can be used in various applications, and is particularly suitable for use as a glass article used in an environment in which a water drop adheres thereto. The water drop is commonly supplied from natural water, such as rain or mist, or tap water. The coating-attached glass article according to the present embodiment may be, specifically, an article being at least one selected from the group consisting of glass for architecture, glass for transport vehicles, glass for stores, glass for furniture, glass for home appliances, glass for signage, glass for mobile devices, and glass for solar cells. The coating-attached glass article according to the present embodiment may be an article being at least one selected from the group consisting of window glass, roof glass, glass for bathrooms, mirrors, glass for stores, glass for mobile devices, and glass for solar cells. Examples of the window glass include window glass of architecture and transport vehicles, and examples of the roof glass include the same. The architecture includes not only houses and tall buildings but also greenhouses, arcades, and other constructions fixed on lands. The transport vehicles include vehicles, vessels, and aircrafts. Examples of the vehicles include motor vehicles and railroad cars. Examples of the glass for bathrooms include glass partitions and glass doors of bathrooms. Examples of the mirrors include mirrors in bathrooms and mirrors of bathroom vanities. Examples of the glass for stores include display windows, counters, tables, glass doors of refrigerated cases and freezer cases, and showcases of foods, etc. Examples of the glass for mobile devices include glass covering displays of mobile devices such as smartphones and tablet PCs and, in some case, glass of housings of mobile devices. Examples of the glass for solar cells include cover glasses disposed on the light incident side of solar cells. In particular, when safety of human body needs to be ensured, a reinforced glass is often used in the above applications.

### (Manufacturing method)

Next, a method for manufacturing the glass article of the present embodiment will be described. However, the glass article of the present embodiment may be manufactured by a method other than the following manufacturing method.

The manufacturing method of the present embodiment includes: forming the diffusion prevention layer on the glass substrate; and forming the easy-to-clean coating on the diffusion prevention layer. The manufacturing method of the present embodiment may include subjecting the glass substrate to a treatment involving heating after the formation of the easy-to-clean coating. The temperature set in the treatment involving heating is, for example, 100°C or more, 200°C or more, or even 300°C or more, and may be 760°C or less.

### [Second embodiment]

A coating-attached glass article provided by the present embodiment includes:
a glass substrate; and
an easy-to-clean coating on the glass substrate, wherein
the glass substrate includes a dealkalized layer in the surface on the coating side.

It has been found out that provision of the dealkalized layer in the surface of the glass substrate on the coating side can improve recovery of the water repellency of the coating, specifically, the increase rate of the water contact angle, after a thermal treatment.

The glass article of the present embodiment can have the same configuration, properties, applications, etc. as those of the glass article of the first embodiment except that the glass substrate includes the dealkalized layer in the surface on the coating side. Hereinafter, description is omitted except for that of the dealkalized layer in the surface of the glass substrate on the coating side.

In the present embodiment, the dealkalized layer refers to a silica-rich layer formed by a dealkalization reaction, namely, an elimination reaction of the alkaline component (alkali metal element), in the surface of the glass substrate and subsequent densification.

The glass substrate including the dealkalized layer in the surface on the coating side can be manufactured, for example, by a float process which is a method for continuously manufacturing a glass sheet. In the float process, a glass raw material molten in a float furnace is shaped into a plate-like glass ribbon on a molten metal in a float bath, and the glass ribbon is gradually cooled in an annealing furnace and then cut into a glass sheet having a given size. In the present embodiment, a case of using molten tin as a molten metal will be described. Hereinafter, a surface of a glass sheet is called a bottom surface, the surface being in contact with molten tin in the shaping process in a float bath. The surface opposite the bottom surface is called a top surface, the surface not being in contact with molten tin in the shaping process. A glass sheet obtained by the float process is called a float glass.

First, at least the bottom surface is subjected to dealkalization. The term "dealkalization" herein means extracting the alkaline component from the glass by bringing an oxidizing gas that reacts with the alkaline component into contact with a surface of the glass sheet. The extracted alkaline component reacts with the oxidizing gas, and consequently a protective film is formed in at least the bottom surface of the glass sheet.

For example, a sulfurous acid gas (SO₂ gas) can be used as the oxidizing gas. The SO₂ reacts with constituent components of the glass to form an alkali sulfate such as sodium sulfate on the glass sheet surface. This alkali sulfate serves as the protective film. The oxidizing gas used herein may be a gas other than a SO₂ gas, the gas being capable of reacting with the alkaline component in the glass to form a protective film. It should be noted that a gas, such as a hydrogen fluoride gas, that can exhibit a strong dealkalization effect is not preferred because the gas does not form a protective film and etches the glass surface to form irregularities on the glass surface. An inert gas such as air, nitrogen, or argon may be used as a carrier gas. The oxidizing gas may further include water vapor.

Subsequently, a portion where the protective film has been formed is densified. Specifically, in place of the alkaline component extracted by the dealkalization, moisture in an atmosphere enters the glass in various forms, such as a proton (H⁺), an oxonium ion (H₃O⁺), and the like, to form a silanol group (Si-OH) in the portion where the protective film has been formed. This silanol group undergoes dehydration condensation to form a siloxane bond (Si-O-Si). In the present embodiment, a state where such dehydration condensation has increased the amount of siloxane bonds is called a "densified" state. The glass sheet surface having an increased amount of siloxane bonds is less likely to be etched. Therefore, measurement of an etching rate reveals the degree of densification.

The dealkalized layer is formed in at least the bottom surface by the above method. The top surface may also be subjected to the treatment for formation of the dealkalized layer. Even when the oxidizing gas is blown against the bottom surface only, a portion of the blown oxidizing gas can go around to the top surface side, treating the top surface to form a dealkalized layer therein.

In the present embodiment, the dealkalized layer in the surface on the coating side of the glass substrate may be a dealkalized layer formed in the bottom surface, or may be a dealkalized layer formed in the top surface. The formation of the dealkalized layer formed in the surface on the coating side of the glass substrate results in reduction of diffusive movement of the alkaline component of the glass from the glass substrate to the coating.

In the case where the portion of the oxidizing gas blown against the bottom surface goes around to the top surface side to form a dealkalized layer also in the top surface of the float glass, the thickness of the dealkalized layer in the top surface is commonly greater than the thickness of the dealkalized layer in the bottom surface. This is because a tin oxide film in the bottom surface reduces the reaction between the SO₂ gas and the constituent components of the glass, reducing formation of the dealkalized layer in the bottom surface. In the present embodiment, the surface of the glass substrate on the coating side may be a top surface. In this case, diffusive movement of the alkaline component of the glass from the glass substrate to the coating is more effectively reduced.

### (Manufacturing method)

Next, a method for manufacturing the glass article of the present embodiment will be described. However, the glass article of the present embodiment may be manufactured by a method other than the following manufacturing method.

A method for manufacturing the glass article of the present embodiment includes forming the easy-to-clean coating on the dealkalized layer of the glass substrate. The manufacturing method of the present embodiment may include subjecting the glass substrate to a treatment involving heating after the formation of the easy-to-clean coating. The temperature set in the treatment involving heating is, for example, 100°C or more, 200°C or more, or even 300°C or more, and may be 760°C or less.

### EXAMPLES

Hereinafter, the present invention will be described in more detail with reference to examples. The following examples are not intended to limit the present invention to specific embodiments. Glass sheets were used as glass substrates in the following examples. In each of glass compositions forming the glass sheets used below, sodium was the Group 1 element whose content was highest among Group 1 elements, and calcium was the Group 2 element whose content was highest among Group 2 elements. The sodium content was 4 to 6 atm% and the calcium content was 4 to 6 atm% in each glass composition.

### (Thermal treatment before measurement)

Each easy-to-clean-coating-attached glass article was subjected to a thermal treatment before evaluation of the properties. In the thermal treatment, each coating-attached glass sheet was heated in an electric furnace set at 760°C for 4 minutes, taken out of the furnace, wrapped in ceramic wool, and then cooled to room temperature at a cooling rate at which heat cracking does not occur.

### (Water contact angle)

An amount of 4 mg of purified water was dropped onto a surface of each coating, and the water contact angle was measured using a contact angle measurement apparatus (DMs-401 manufactured by Kyowa Interface Science Co., Ltd.) according to the sessile drop method defined in JIS R 3257: 1999. The water contact angle was measured after the later-described thermal treatment (initial), after leaving the coating-attached glass substrate having undergone the thermal treatment in air at ordinary temperature for one week (1 wk later), and after leaving the coating-attached glass substrate for one more week (2 wks later). The relative humidity of the air in which each coating-attached glass substrate was left was about 20 to 60%.

### (Optical properties)

The visible transmittance was determined from a visible-ultraviolet absorption spectrum measured using a spectrophotometer (330 manufactured by Hitachi, Ltd.). The haze ratio was measured using a haze meter (HZ-V3 manufactured by Suga Test Instruments Co., Ltd.).

### (Thickness)

The thickness of each easy-to-clean coating was measured by SEM observation of a cross-section. For the glass article including a diffusion prevention layer (SiO₂ layer), the thickness of the diffusion prevention layer was also measured by SEM observation of a cross-section.

### (Element analysis)

Distribution of O, Na, Ca, Ce, Zr, and Sn in a depth direction was measured by X-ray photoelectron spectroscopy (XPS).

### (Abrasion resistance)

An abrasion resistance test in which steel wool is used was performed for each easy-to-clean coating in accordance with the abrasion resistance test in EN 1096-2: 2001 except that Grade No. 0000 steel wool was used instead of a felt pad. Specifically, the abrasion resistance test was performed using an abrasion tester (HEIDON Tribostation Type 32 manufactured by SHINTO Scientific Co., Ltd.) by moving, under a 4 N load, the steel wool pressed against a surface of each easy-to-clean coating 500 strokes (Class A). The steel wool was attached to a head of the abrasion tester. The dimensions of a portion of the head were 20 × 20 mm, the portion being brought into contact with the coating to be tested. The steel wool (TSW0000-200 manufactured by TRUSCO NAKAYAMA CORPORATION) attached to the head had dimensions of 140 mm in length × 270 mm in width and a thickness of 75 mm. The amount of the steel wool was about 0.2 g when the steel wool was a piece having dimensions of 20 × 20 mm and a thickness of 75 mm. The abrasion tester was set so that the head would travel a 100 mm distance each way at 6000 mm/min.

Incidentally, an abrasion resistance test in which a felt pad is used was also performed for each easy-to-clean coating. This abrasion resistance test was performed in accordance with the abrasion resistance test in EN 1096-2: 2001, except that a condition of 10000 strokes was employed instead of the condition of 500 strokes (Class A). Specifically, the abrasion resistance test was performed using an abrasion tester (HEIDON Tribostation Type 32 manufactured by SHINTO Scientific Co., Ltd.) by moving, under a 4 N load, the felt pad pressed against a surface of each easy-to-clean coating 10000 strokes. The felt pad was attached to a head of the abrasion tester. A portion of the head had a diameter of 15 mm, the portion being brought into contact with the coating to be tested. The felt pad had a density of 0.5 g/cm³. The abrasion tester was set so that the head would travel a 100 mm distance each way at 6000 mm/min.

### (Dirt adhesion test)

Tap water was sprayed on the coating surface of each coating-attached glass article in such a position that a principal surface of the coating-attached glass article faced a vertical direction. Next, the coating-attached glass article was held at room temperature for 10 minutes to evaporate water drops adhered on the coating surface. After that, light from an LED light source was incident on an edge face of the glass article, and the coating surface was observed.

First, using Examples 1 to 4 and Comparative Examples 1 and 2, the water contact angle was examined for glass articles each including the diffusion prevention layer between the glass substrate and the coating.

### <Example 1>

An amount of 4.04 g of cerium(III) nitrate hexahydrate (Ce(NO₃)₃•6H₂O) (manufactured by FUJIFILM Wako Pure Chemical Corporation; 98%), 67.2 g of acetylacetone, and 60 g of propylene glycol were dissolved in 268.8 g of a solvent mixture (Fineeter A-10 manufactured by FUTABA PURE CHEMICAL CO., LTD.) containing ethanol as a main solvent to obtain a coating liquid. The coating liquid was aged under stirring at 40°C for 15 hours or more. The aged coating liquid was light yellow.

A glass in which a silicon oxide (SiO₂) layer was arranged (OptiShower manufactured by Pilkington Group Limited; thickness of SiO₂ layer: 15 nm; hereinafter referred to as "OPS") was used as a glass substrate. The glass sheet was cut into a 10 cm square piece, which was washed and dried. The aged coating liquid was applied to the SiO₂ layer by spraying. The coating-attached glass article was subjected to a drying treatment in which the coating-attached glass article was heated in an oven set at 250°C for 10 minutes. The coating-attached glass article having undergone the drying treatment was subjected to the above thermal treatment. A coating-attached glass article of Example 1 was obtained in this manner.

### <Example 2>

In 267.0 g of a solvent mixture (Fineeter A-10 manufactured by FUTABA PURE CHEMICAL CO., LTD.) containing ethanol as a main solvent were dissolved 3.33 g of cerium(III) nitrate hexahydrate (Ce(NO₃)₃•6H₂O) (manufactured by FUJIFILM Wako Pure Chemical Corporation; 98%), 2.48 g of diacetoxyzirconium(IV) oxide (CaHsOsZr) (manufactured by Tokyo Chemical Industry Co., Ltd.; 20%), 67.2 g of acetylacetone, and 60 g of propylene glycol to obtain a coating liquid. In the coating liquid, a molar ratio between CeO₂ and ZrO₂ was 3.5:1. Subsequently, the coating liquid was aged under stirring at 40°C for 15 hours or more. The aged coating liquid was light yellow.

A coating-attached glass article of Example 2 was obtained in the same manner as in Example 1, except that the coating liquid of Example 2 was used as the coating liquid.

### <Example 3>

An amount of 3.33 g of cerium(III) nitrate hexahydrate (Ce(NO₃)₃•6H₂O) (manufactured by FUJIFILM Wako Pure Chemical Corporation; 98%), 0.53 g of aluminum nitrate nonahydrate (Al(NO₃)₃•9H₂O) (manufactured by Tokyo Chemical Industry Co., Ltd.; 20%), 67.2 g of acetylacetone, and 60 g of propylene glycol were dissolved in 269.5 g of a solvent mixture (Fineeter A-10 manufactured by FUTABA PURE CHEMICAL CO., LTD.) containing ethanol as a main solvent to obtain a coating liquid. In the coating liquid, a molar ratio between CeO₂ and Al₂O₃ was 2.8:1. Subsequently, the coating liquid was aged under stirring at 40°C for 15 hours or more. The aged coating liquid was transparent and light yellow.

A coating-attached glass article of Example 3 was obtained in the same manner as in Example 1, except that the coating liquid of Example 3 was used as the coating liquid.

### <Comparative Example 1>

Highly-transmissive glass (Optiwhite (registered trademark) manufactured by Nippon Sheet Glass Co., Ltd.; thickness: 3 mm; hereinafter referred to as "OPW") was used as the glass substrate, and the coating was formed thereon. That is, in Comparative Example 1, no diffusion prevention layer was formed on the glass substrate. A coating-attached glass article of Comparative Example 1 was obtained in the same manner as in Example 1, except for this.

### <Comparative Example 2>

A coating-attached glass substrate of Comparative Example 1 was obtained in the same manner as in Example 2, except that OPW was used as the glass substrate.

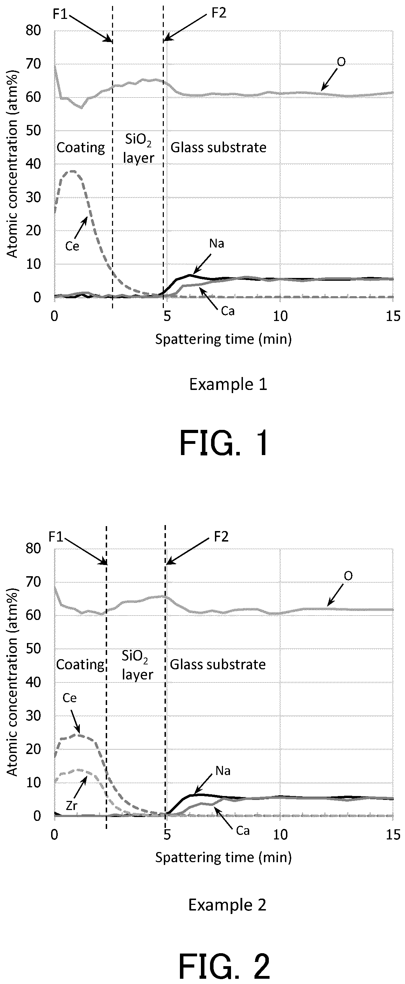

The water contact angles (initial, 1 wk later, 2 wks later), the visible transmittance, etc. were measured by the above methods for each of Examples 1 to 3 and Comparative Examples 1 and 2. FIG. 1 shows the results. Table 1 also shows measurement values of Reference Examples 1 and 2 in which no coating was arranged on a surface of a glass substrate.

**[Table 1]**

| | Glass substrate | Coating (molar ratio) | Thickness of coating (nm) | Thickness of diffusion prevention layer (nm) | Contact angle (°) | | | Visible transmittance (%) | Haze ratio (%) |
|---|---|---|---|---|---|---|---|---|---|
| | | | | | Initial | 1 wk later | 2 wks later | | |
| Example 1 | OPS | CeO₂ | 20 | 15 | 40.1 | 87.8 | 87.0 | 90.1 | 0.05 |
| Example 2 | OPS | CeO₂:ZrO₂ = 3.5:1 | 20 | 15 | 51.3 | 87.1 | 90.3 | 89.8 | 0.04 |
| Example 3 | OPS | CeO₂:Al₂O₃ = 2.8:1 | 20 | 15 | 79.8 | 73.1 | 78.1 | 88.9 | 0.17 |
| Comparative Example 1 | OPW | CeO₂ | 20 | - | 11.7 | 31.5 | 32.4 | 90.5 | 0.30 |
| Comparative Example 2 | OPW | CeO₂:ZrO₂ = 3.5:1 | 20 | - | 3.2 | 15.0 | 21.2 | 90.9 | 0.22 |
| Reference Example 1 | OPS | - | - | 15 | 30.1 | 34.5 | 36.8 | 90.0 | 0.36 |
| Reference Example 2 | OPW | - | - | - | 9.1 | 15.7 | 17.4 | 89.4 | 0.39 |

### <Example 4>

A coating liquid of Example 4 was obtained in the same manner as in Example 1.

An ultrathin glass sheet (UFF (registered trademark) manufactured by Nippon Sheet Glass Co., Ltd.; thickness: 0.28 mm; hereinafter referred to as "UFF") having a dealkalized layer in its top surface, namely, the surface not in contact with molten tin in a manufacturing process of the glass sheet, was used as the glass substrate, and the coating was formed on the top surface. A coating-attached glass article of Example 4 was obtained in the same manner as in Example 1, except for this.

### <Example 5>

A coating liquid of Example 5 was obtained in the same manner as in Example 2.

A coating-attached glass substrate of Example 5 was obtained in the same manner as in Example 4 using UFF as the glass substrate.

The water contact angles (initial, 1 wk later, 2 wks later), the visible transmittance, etc. were measured by the above methods for each of Examples 1, 2, 4, and 5. FIG. 2 shows the results. Table 2 also shows measurement values of Reference Example 3 in which no coating was arranged on a surface of a glass substrate.

**[Table 2]**

| | Glass substrate | Coating (molar ratio) | Thickness of coating (nm) | Contact angle (°) | | | Visible transmittance (%) | Haze ratio (%) |
|---|---|---|---|---|---|---|---|---|
| | | | | Initial | 1 wk later | 2 wks later | | |
| Example 1 | OPS | CeO₂ | 20 | 40.1 | 87.8 | 87.0 | 90.1 | 0.05 |
| Example 2 | OPS | CeO₂:ZrO₂ = 3.5:1 | 20 | 51.3 | 87.1 | 90.3 | 89.8 | 0.04 |
| Example 4 | UFF | CeO₂ | 20 | 29.8 | 45.0 | 64.2 | 90.6 | 0.12 |
| Example 5 | UFF | CeO₂:ZrO₂ = 3.5:1 | 20 | 39.3 | 76.8 | 84.4 | 90.3 | 0.09 |
| Reference Example 3 | UFF | - | - | 12.2 | 8.4 | 22.5 | 92.0 | 0.16 |

### <Example 6>

A coating liquid of Example 6 was obtained in the same manner as in Example 1.

A glass in which a Low-E film was arranged (Low-E manufactured by Nippon Sheet Glass Co., Ltd.; thickness of Low-E film: 3.1 mm; hereinafter referred to as "Low-E") was used as the glass substrate, and the coating was formed on the Low-E film. A coating-attached glass substrate of Example 6 was obtained in the same manner as in Example 1, except for this.

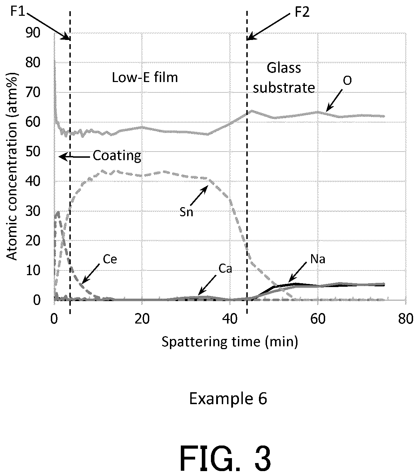

FIGS. 1 to 5 show measurement results of distribution of elements (O, Na, Ca, Ce, Zr, and Sn) in a depth direction for Examples 1, 2, and 6 and Comparative Examples 1 and 2. In FIGS. 1 to 5, a dotted line indicated by a reference character F1 indicates a point at which the sum of the content of the Group 1 element and the content of the Group 2 element was measured, namely, the surface of the coating on the glass substrate side. A dotted line indicated by a reference character F2 indicates the surface of the glass substrate on the coating side. Table 3 shows the measured sodium contents, the measured calcium contents, and the sums of the contents.

**[Table 3]**

| | Glass substrate | Coating (molar ratio) | Thickness of diffusion prevention layer (nm) | Na content (atm%) | Ca content (atm%) | Na + Ca content (atm%) |
|---|---|---|---|---|---|---|
| Example 1 | OPS | CeO₂ | 15 | 0.19 | 0.61 | 0.80 |
| Example 2 | OPS | CeO₂:ZrO₂ = 3.5:1 | 15 | 0 | 0 | 0 |
| Example 6 | Low-E | CeO₂ | 385 | 0 | 0.54 | 0.54 |
| Comparative Example 1 | OPW | CeO₂ | - | 3.09 | 1.37 | 4.46 |
| Comparative Example 2 | OPW | CeO₂:ZrO₂ = 3.5:1 | - | 4.47 | 0.34 | 4.81 |

### <Example 7>

A coating liquid of Example 7 was obtained in the same manner as in Example 2.

A coating-attached glass substrate of Example 7 was obtained in the same manner as in Example 1 using OPS as the glass substrate.

### <Example 8>

A component ratio in the coating liquid was adjusted such that the molar ratio between CeO₂ and ZrO₂ was 6:1 in the coating liquid. A coating-attached glass substrate of Example 8 was obtained in the same manner as in Example 7, except for this.

### <Example 9>

A component ratio in the coating liquid was adjusted such that the molar ratio between CeO₂ and ZrO₂ was 9.3:1 in the coating liquid. A coating-attached glass substrate of Example 9 was obtained in the same manner as in Example 7, except for this.

### <Example 10>

A component ratio in the coating liquid was adjusted such that the molar ratio between CeO₂ and ZrO₂ was 1:1 in the coating liquid. A coating-attached glass substrate of Example 10 was obtained in the same manner as in Example 7, except for this.

### <Example 11>

A component ratio in the coating liquid was adjusted such that the molar ratio between CeO₂ and ZrO₂ was 0:1 in the coating liquid. That is, a coating liquid of Example 11 was substantially free of CeO₂. A coating-attached glass substrate of Example 11 was obtained in the same manner as in Example 7, except for this.

### <Comparative Example 3>

A component ratio in the coating liquid was adjusted such that the molar ratio between CeO₂ and ZrO₂ was 1:0 in the coating liquid. That is, a coating liquid of Comparative Example 3 was substantially free of ZrO₂.

OPW was used as the glass substrate, and the coating was formed thereon. That is, Comparative Example 3 did not have a diffusion prevention layer. A coating-attached glass substrate of Comparative Example 3 was obtained in the same manner as in Example 7, except for this.

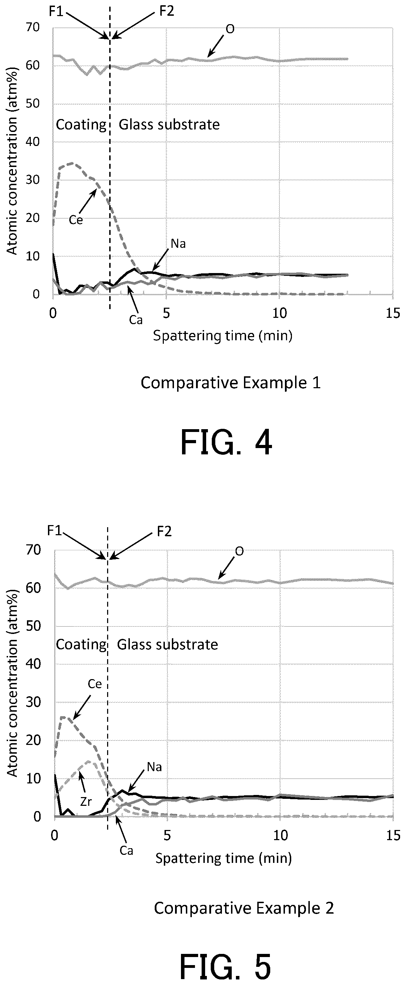

A difference of visible transmittances before and after the abrasion resistance test was measured by the above method for each of Examples 7 to 11 and Comparative Example 3. FIG. 4 shows the results. Table 4 also shows measurement values of Reference Examples 4 and 5 in which no coating was arranged on a surface of a glass substrate.

**[Table 4]**

| | Glass substrate | Coating (molar ratio) | Thickness of coating (nm) | Thickness of diffusion prevention layer (nm) | Difference between visible transmittances before and after steel wool abrasion resistance test (500 strokes) |
|---|---|---|---|---|---|
| Example 7 | OPS | CeO₂:ZrO₂ = 3.5:1 | 20 | 15 | 0.30 |
| Example 8 | OPS | CeO₂:ZrO₂ = 6:1 | 20 | 15 | -0.12 |
| Example 9 | OPS | CeO₂:ZrO₂ = 9.3:1 | 20 | 15 | 0.07 |
| Example 10 | OPS | CeO₂:ZrO₂ = 1:1 | 20 | 15 | -0.26 |
| Example 11 | OPS | ZrO₂ | 20 | 15 | 0.02 |
| Comparative Example 3 | OPW | CeO₂ | 20 | - | 1.46 |
| Reference Example 4 | OPS | - | - | 15 | -0.22 |
| Reference Example 5 | OPW | - | - | - | -0.04 |

According to the results of the abrasion resistance test in which steel wool is used, the absolute value of the difference between the visible transmittances is 0.7% or less in each Example. On the other hand, in Comparative Example, the absolute value of the difference between the visible transmittances is more than 0.7%. The difference between the visible transmittances is a positive value in Comparative Example because at least a portion of the coating peeled off after the abrasion resistance test and the visible transmittance increased. Also in the abrasion resistance test in which a felt pad is used, the absolute value of the difference between the visible transmittances in each Example is 0.22% or less, which is lower than the absolute values (more than 0.22%) in Comparative Example. Individual data of this test is omitted.

Moreover, in Examples 1 to 5, the contact angle of water on the surface of the coating after the thermal treatment is 60° or more and 130° or less. According to the results of the dirt adhesion test, marks on portions to which the water drops adhered were less noticeable in Examples 1 to 5 than in Reference Examples 1 and 2. This reflects the water contact angle higher than those of the glass surfaces. In Reference Examples 1 and 2, since no coatings were arranged, water was easily adhered to the surfaces, marks on portions to which the water drops adhered or traces of water flow were present over a wide area, and the glass substrates had whitish appearances.

## Claims

1. A coating-attached glass article, comprising:
a glass substrate;
an easy-to-clean coating on the glass substrate; and
a diffusion prevention layer between the glass substrate and the coating.

2. A coating-attached glass article, comprising:
a glass substrate; and
an easy-to-clean coating on the glass substrate, wherein
the glass substrate includes a dealkalized layer in a surface on the coating side.

3. The coating-attached glass article according to claim 1 or 2, wherein a sum of a content of a Group 1 element and a content of a Group 2 element in a surface of the coating on the glass substrate side is 5 atm% or less.

4. The coating-attached glass article according to claim 1 or 2, wherein when a Group 1 element whose content is highest among Group 1 elements in a glass composition forming the glass substrate is represented by an element R and a Group 2 element whose content is highest among Group 2 elements in the glass composition is represented by an element M, a sum of the content of the element R and the content of the element M in a surface of the coating on the glass substrate side is 4 atm% or less.

5. The coating-attached glass article according to any one of claims 1 to 4, wherein the coating includes an oxide of a rare-earth element.

6. The coating-attached glass article according to any one of claims 1 to 5, wherein the coating includes cerium oxide.

7. The coating-attached glass article according to claim 6, wherein the cerium oxide is crystalline.

8. The coating-attached glass article according to any one of claims 1 to 7, wherein the coating includes zirconium oxide.

9. The coating-attached glass article according to any one of claims 1 to 8, wherein a contact angle of water on a surface of the coating after exposure of the coating-attached glass article to a thermal treatment at 760°C for 4 minutes and two-week storage of the coating-attached glass article in air at ordinary temperature is 60° or more and 130° or less.

10. The coating-attached glass article according to claim 1, wherein a thickness of the diffusion prevention layer is 10 to 400 nm.

11. The coating-attached glass article according to claim 10, wherein the diffusion prevention layer includes SiO₂ as a main component.

12. The coating-attached glass article according to claim 10 or 11, wherein the diffusion prevention layer is amorphous.

13. The coating-attached glass article according to claim 2, wherein
the glass substrate is formed of a float glass, and
the surface of the glass substrate is a top surface of the float glass.

14. The coating-attached glass article according to any one of claims 5 to 8, wherein the coating further includes aluminum oxide.

15. The coating-attached glass article according to any one of claims 1 to 14, wherein an absolute value of a difference between visible transmittances is 0.7% or less, the visible transmittances being determined before and after an abrasion resistance test performed for the coating in accordance with an abrasion resistance test in EN 1096-2: 2001 under a condition of 500 strokes except that Grade No. 0000 steel wool is used instead of a felt pad.

16. The coating-attached glass article according to any one of claims 1 to 15, wherein the glass substrate is formed of a reinforced glass.

17. The coating-attached glass article according to any one of claims 1 to 16, being at least one selected from the group consisting of glass for architecture, glass for transport vehicles, glass for stores, glass for furniture, glass for home appliances, glass for signages, glass for mobile devices, and glass for solar cells.

18. The coating-attached glass article according to any one of claims 1 to 17, wherein the coating is substantially free of a fluoroalkyl-containing compound.

19. The coating-attached glass article according to any one of claims 1 to 18, wherein the coating is a single-layer film.

20. The coating-attached glass article according to any one of claims 1 to 19, wherein a thickness of the coating is 10 nm or more and 300 nm or less.
